# NEUE EUROPÄISCHE PATENTSCHRIFT

(11) **EP 2 091 681 B2**
(45) Veröffentlichungstag und Bekanntmachung des Hinweises auf die Entscheidung über den Einspruch: **14.12.2016**
(45) Hinweis auf die Patenterteilung: 16.01.2013
(21) Anmeldenummer: 07846743.8
(22) Anmeldetag: 22.11.2007
(51) Int. Cl.: B23B 27/00, B23B 29/24

(54) **Schneidplatte für ein Drehwerkzeug und Bearbeitungsverfahren mit dieser Schneidplatte**
Cutting insert for a turning tool and machining process with this cutting insert
Plaquette de coupe pour un outil de tournage et procédé d'usinage avec cette plaquette de coupe

(30) Priorität: 23.11.2006 DE 102006055277
(43) Veröffentlichungstag der Anmeldung: 26.08.2009
(73) Patentinhaber: Hartmetall-Werkzeugfabrik Paul Horn GmbH, 72072 Tübingen (DE)
(72) Erfinder: SCHÄFER, Hans, 72810 Gomaringen (DE); RAACH, Hartmut, 72393 Burladingen-Stetten (DE); DAHLE-SCHRÖDER, Volker, 30826 Garbsen (DE)
(74) Vertreter: Witte, Weller & Partner Patentanwälte mbB
(86) Internationale Anmeldenummer: PCT/EP2007/010139
(87) Internationale Veröffentlichungsnummer: WO 2008/061761

(56) Entgegenhaltungen:
- EP-A2- 1 287 929
- EP-B- 0 934 135
- EP-B- 1 287 929
- DE-A1-102004 013 835
- DE-C1- 19 522 452
- DE-C1- 19 522 452
- FR-A- 891 130
- US-A- 3 245 288
- 'Produktkatalog der Fa Hartmetall Werkzeugfabrik Paul Horn GmbH' PRODUKTKATALOG Januar 2015, DEUTSCHLAND,

## Beschreibung

Die Erfindung betrifft eine Schneidplatte für ein Drehwerkzeug, mit einem Grundkörper, der einen Kupplungsteil für das Anbringen der Schneidplatte an einem Sitz an der Stirnseite eines schaftartigen Halters aufweist, der eine Längsachse definiert, wobei der Kupplungsteil eine Festlegestruktur aufweist, die durch Eingriff mit zugeordneten Flächen am Sitz die Schneidplatte gegen eine Drehung um die Längsachse sichert, und mit einem vom Umfang des Grundkörpers, bezogen auf die Längsachse, radial auskragenden Schneidkörper mit zumindest einer bei einer Relativdrehung zwischen Schneidplatte und einem zu bearbeitenden Werkstück wirksamen Schneidkante.

Schneidplatten dieser Art sind bekannt, siehe das Dokument DE 34 48 086 C2. Wie diese Druckschrift zeigt, werden derartige Schneidplatten bevorzugt zur Herstellung von Inneneinstichen in Bohrungen eines Werkstückes benutzt. Beim Stechdrehen in Bohrungen gestaltet sich der Arbeitsablauf vielfach umständlich und zeitraubend, und zwar insbesondere in den Fällen, bei denen im Zuge der Bearbeitung ein Schneidplattenwechsel erforderlich ist Diese Notwendigkeit ergibt sich recht häufig, beispielsweise wenn eine Nut erzeugt werden soll, bei der ein Vorstechen und ein darauf folgendes Fertigstechen erforderlich ist. Als weitere Beispiele, die einen Schneidplattenwechsel erforderlich machen, wäre die Herstellung verschiedenartiger Nuten in ein- und derselben Bohrung, gegebenenfalls mit oder ohne Nut-Außenkantenfase, oder beispielsweise das Stechen von Nuten mit unterschiedlich konfiguriertem Nutgrund zu nennen. In diesen und anderen Fällen ist es für den Schneidplattenwechsel erforderlich, den Halter aus der Bohrung heraus in eine vom Werkstück ausreichend weit entfernte Wechselposition zu bringen, wodurch unter anderem eine Verlängerung der Gesamtbearbeitungszeit bedingt ist.

Ausgehend von diesem Stand der Technik stellt sich die Erfindung die Aufgabe, eine Schneidplatte zur Verfügung zu stellen, die einen beschleunigten und damit besonders rationellen Arbeitsablauf beim Stechdrehen in Bohrungen ermöglicht.

Erfindungsgemäß ist diese Aufgabe durch eine Schneidplatte gelöst, die die Merkmale des Patentanspruches 1 in seiner Gesamtheit aufweist.

Dadurch, dass am Grundkörper der Schneidplatte zwei in Umfangsrichtung zueinander versetzte, radial auskragende, unterschiedlich ausgestaltete Schneidkörper vorhanden sind und dass deren Schneidkanten unterschiedlich ausgestaltet und derart orientiert sind, dass sämtliche ihre Schneidwirkung bei ein- und demselben Drehsinn der Relativdrehung entfalten, eröffnet sich die Möglichkeit, Bearbeitungsvorgänge, bei denen unterschiedliche Schneidkanten benutzt werden müssen, was beim Stand der Technik jeweils einen Schneidplattenwechsel bedingt, in sozusagen kontinuierlichem Arbeitsablauf ohne Schneidplattenwechsel durchzuführen, indem, ohne dass der Bearbeitungsdrehsinn geändert werden müsste oder ein Ausfahren des schaftartigen Halters aus der Bohrung vorzunehmen wäre, durch entsprechende Vorschubbewegungen des schaftartigen Halters die Schneidkanten des jeweils gewünschten Schneidkörpers in Arbeitseingriff gebracht werden. Somit ergibt sich ein besonders schneller und rationeller Arbeitsablauf.

Beide Schneidkörper sind am Grundkörper diametral angeordnet, so dass ihre Schneidkanten zueinander zumindest näherungsweise um 180° versetzt sind. Für die jeweilige Einstechtiefe kann hierbei die Vorschubbewegung derart erfolgen, dass der Halter und die Schneidplatte für den Betrieb beider Schneidkörper in einer einzigen Ebene bewegt werden.

Weiterhin können sich die Schneidkanten beider Schneidkörper in gleichem Radialabstand befinden oder können unterschiedliche Radialabstände von der Längsachse besitzen.

Bei besonders vorteilhaften Ausführungsbeispielen können die Schneidkanten eines Schneidkörpers für das Vorstechen einer Nut und die Schneidkanten des anderen Schneidkörpers für das Fertigstechen der gleichen Nut, gegebenenfalls mit Erzeugung einer Nut-Außenkantenfase, ausgebildet sein.

Zudem können, beispielsweise zusätzlich zu in radialer Stechrichtung schneidenden Schneidkanten, an den Schneidkörpem in Axialrichtung schneidende Schneidkanten vorhanden sein, die beim einen Schneidkörper und beim andere Schneidkörper in unterschiedlichen Axialpositionen gelegen sein können.

Gegenstand der Erfindung ist auch ein Bearbeitungsverfahren, insbesondere Stechdrehen in Bohrungen eines Werkstückes, mit einer erfindungsgemäßen Schneidplatte und den im Patentanspruch 9 angegebenen Merkmalen.

Nachstehend ist die Erfindung anhand von in der Zeichnung dargestellten Ausführungsbeispielen im Einzelnen erläutert. Es zeigen:
- Fig. 1 eine perspektivische Darstellung, in der in der Art einer Explosionsansicht fünf verschiedene Ausführungsbeispiele der erfindungsgemäßen Schneidplatte sowie ein den Schneidplatten zuordenbarer Halter gezeigt sind;
- Fig. 2 eine perspektivische Schrägansicht, in der eine zur Verdeutlichung eines Arbeitsvorganges nur hälftig dargestellte Werkstückbohrung sowie ein an einem Halter festgelegtes Ausführungsbeispiel der Schneidplatte gezeigt sind;
- Fig. 3 und 4 Draufsichten zweier weiterer Beispiele der Schneidplatte mit zugeordnetem Halter, wobei zur Verdeutlichung eines Bearbeitungsvorganges eine Bohrung nur hälftig gezeigt ist;
- Fig. 5 eine der Fig. 2 entsprechende Darstellung, jedoch mit einem weiteren Ausführungsbeispiel der Schneidplatte und
- Fig. 6 und 7 den Fig. 3 und 4 entsprechende Draufsichten, wobei jedoch das in Fig. 1 ganz links außen gezeigte Ausführungsbeispiel der Schneidplatte dargestellt ist.

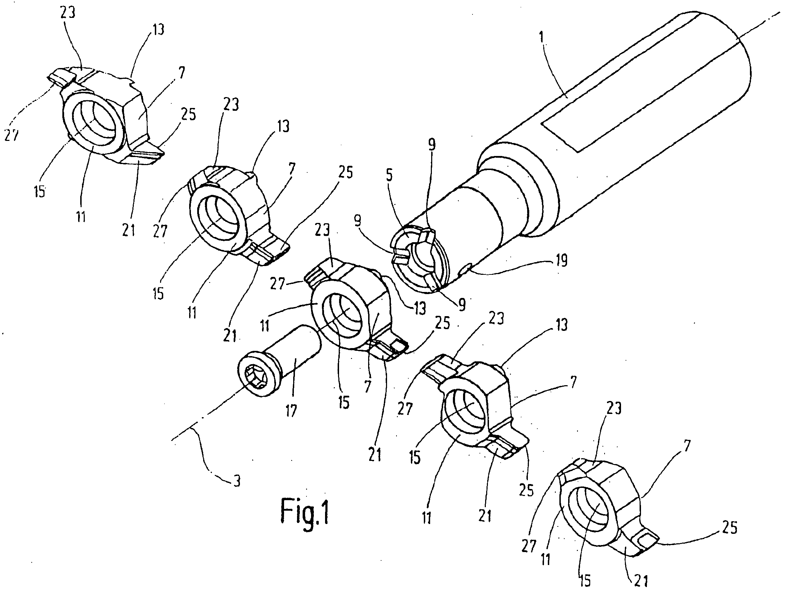

Ein schaftartiger Werkzeughalter 1 mit einer Längsachse 3 weist am stirnseitigen Ende einen Sitz 5 für die Festlegung einer Schneidplatte 7 auf, wobei in an sich bekannter Weise (siehe DE 34 48 086 C2) am Sitz 5 Vertiefungen 9 vorhanden sind, in denen bei an den Sitz 5 angelegter Schneidplatte 7 Kupplungszähne 13 zu Sitzen kommen, die an der dem Sitz 5 zugeordneten Seite der betreffenden Schneidplatte 7 einen Kupplungsteil ausbilden, um die Schneidplatte 7 gegen ein Verdrehen zu sichern. Die Kupplungszähne 13 sind an einem im wesentlichen kreiszylinderförmigen Grundkörper 11 der jeweiligen Schneidplatte 7 vorstehend ausgebildet. Eine zentrale Bohrung 15 im Grundkörper 11 ermöglicht die Festlegung der jeweiligen Schneidplatte 7 am Sitz 5 des Halters 1 mittels einer Spannschraube 17, wobei die Schraubverbindung in der aus dem erwähnten Dokument DE 34 48 086 C2 bekannten Art ausgebildet ist. Der Halter 1 weist in üblicher Weise einen nicht gezeigten inneren Kanal für die Zufuhr von KühlSchmiermittel auf, wobei der Kanal im Bereich des stirnseitigen Endes an einer Öffnung 19 mündet (Fig. 1).

Die Fig. 1 verdeutlicht fünf verschiedene Ausführungsformen der erfindungsgemäßen Schneidplatte 7. Diese weisen jeweils einen ersten Schneidkörper 21 und einen zweiten Schneidkörper 23 auf, die sich, bezogen auf die Längsachse 3, vom Umfang des Grundkörpers 11 radial auskragend erstrecken, wobei die Schneidkörper 21, 23 einander diametral gegenüberliegend angeordnet sind, so dass Schneidkanten 25 am betreffenden Schneidkörper 21 gegenüber Schneidkanten 27 am betreffenden Schneidkörper 23 um 180 Winkelgrad zueinander versetzt sind.

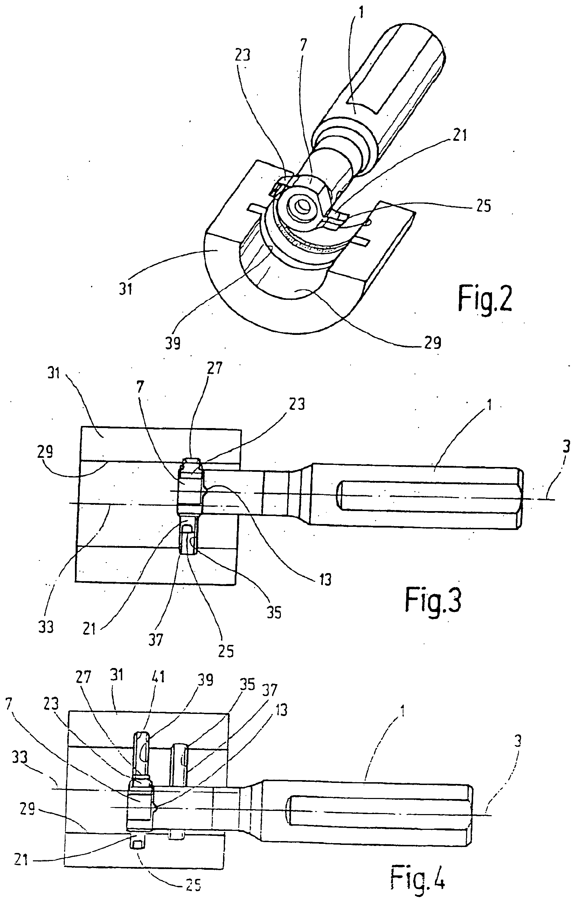

Die Fig. 2 bis 7 verdeutlichen Beispiele für mit erfindungsgemäßen Schneidplatten 7 auszuführende Bearbeitungsvorgänge. Bei dem in Fig. 2 bis 4 gezeigten Beispiel ist am Halter 1 eine Schneidplatte 7 derjenigen Form festgelegt, die in Fig. 1 zentral (auf der Längsachse 3 gelegen) gezeigt ist. Die Bearbeitung erfolgt in einer Bohrung 29, die der Übersichtlichkeit halber nur hälftig angedeutet ist und sich in einem im übrigen nicht dargestellten Werkstück 31 befindet, das durch eine Maschinenspindel in einem Arbeitsdrehsinn um eine Drehachse 33 gedreht wird. Wie Fig. 3 verdeutlicht, wird in einem ersten Schneidvorgang mittels der Schneidkanten 27 am Schneidkörper 23 eine erste Nut 35 mit einer Außenkantenfase 37 gestochen. Bei diesem Arbeitsvorgang befindet sich der Halter 1 und damit die Schneidplatte 7 in einer Position, bei der die Längsachse 3 sich, bezogen auf die Darstellung von Fig. 3, in der Fig. oberhalb der Drehachse 33 befindet. Danach wird in einem zweiten Schneidvorgang, bei dem sich, wie in Fig. 4 dargestellt, die Längsachse 3 des Halters 1 in der Fig. unterhalb der Drehachse 33 befindet, mit den Schneidkanten 25 am Schneidkörper 21 eine zur ersten Nut 35 unterschiedliche zweite Nut 39 gestochen, wobei ebenfalls eine Außenkantenfase 41 gebildet wird.

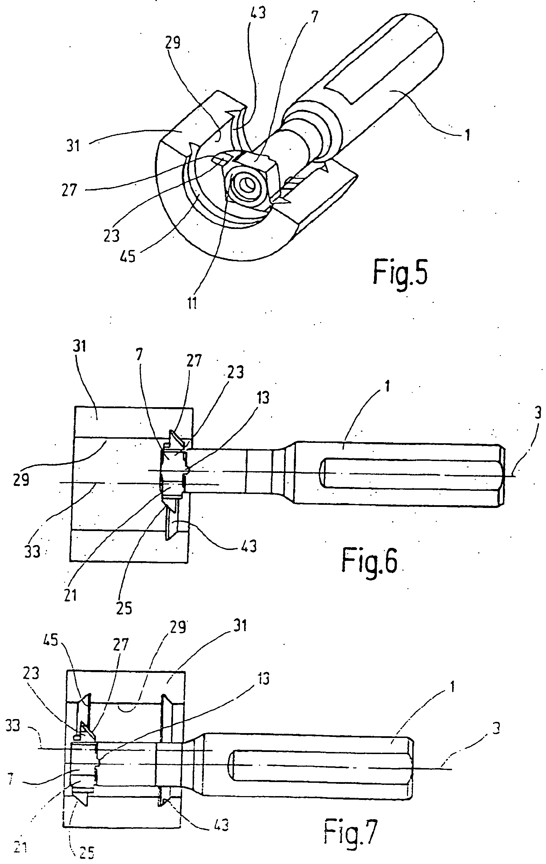

Fig. 5 bis 7 verdeutlichen ein Beispiel, bei dem mit einer Schneidplatte 7, wie sie in Fig. 1 linksseitig außen gelegen dargestellt ist, in der betreffenden Bohrung 29 eine vordere Sicherungsringnut 43 und eine hintere Sicherungsringnut 45 gestochen werden. Wie aus Fig. 6 entnehmbar ist, wird hierbei mit den Schneidkanten 27 des Schneidkörpers 23 die Sicherungsringnut 43 in der Weise gestochen, dass ein spitzer Nutgrund gebildet wird. Sodann wird, entsprechend dem Beispiel von Fig. 2 bis 4, der Halter 1 so verfahren, dass die Schneidkanten 25 am Schneidkörper 21 die zweite, hintere Sicherungsringnut 45 stechen. Wie Fig. 6 ebenfalls zeigt, wirken die Schneidkanten 25, 27 nicht nur radial stechend, sondern auch in Axialrichtung schneidend. Mit axial schneidenden Schneidkanten, die bei den Schneidkörpem in zueinander unterschiedlichen Axialpositionen angeordnet sein können, lassen sich bei axial erfolgenden Vorschubrichtungen (axiale Verschiebung des Halters 1), beispielsweise auch unterschiedliche Nutbreiten erzeugen. Auch können axial schneidende Schneidkanten am einen Schneidkörper in einer axialen Vorschubrichtung des Halters 1 und am anderen Schneidkörper in der entgegengesetzten Vorschubrichtung, in der der Halter 1 längs der Längsachse 3 bewegt wird, schneidend wirksam sein.

Es versteht sich, dass je nach Konfiguration der Schneidkanten und/oder der Dimensionierung der radialen Auskragung der Schneidkörper 21, 23 unterschiedliche Stechvorgänge durchgeführt werden können, beispielsweise kann mit ein- und derselben Schneidplatte 7 ein Vorstechen und ein anschließendes Fertigstechen einer Nut durchgeführt werden, beispielsweise unter Verwendung der in Fig. 1 als zweite von rechts dargestellten Schneidplatte 7.

Bei den in Fig. 2 bis 7 gezeigten Beispielen wird jeweils, um die Schneidkanten am einen Schneidkörper 21 oder am anderen Schneidkörper 23 wirksam werden zu lassen, eine Verschiebebewegung der Längsachse 3 des Halters 1 so vorgenommen, dass sich die Längsachse 3 einmal zu einer Seite und einmal zur anderen Seite der Drehachse 33 befindet. Dieses Vorgehen ist jedoch nicht zwingend. Der Wechsel der Schneidkanten könnte auch, ohne dass die Längsachse 3 über die Drehachse 33 weg verschoben werden muss, durch Verdrehen des Halters 1 und damit der Schneidplatte 7 erfolgen, wobei die die Nuttiefe bestimmende Vorschubrichtung bei beiden Schneidvorgängen gleichsinnig wäre.

Es versteht sich, dass die in den Fig. gezeigten Beispiele der Schneidplatte 7 lediglich als eine Auswahl aus einer Vielzahl möglicher Gestaltungen, sowohl hinsichtlich Dimensionierung als auch Geometrie der Schneidkanten und der Schneidkörper, anzusehen ist.

Auch sind die hier gezeigte Ausbildung der Festlegestruktur am Grundkörper 11 und die entsprechende Gestaltung des Sitzes 5 am Halter 1 nicht zwingend. Anstelle der gezeigten, aus der DE 34 48 086 C2 bekannten Festlegestruktur, könnten andersartige Strukturen vorgesehen sein, etwa Strukturen, wie sie im Dokument DE-19 01 555 A1 offenbart sind.

## Patentansprüche

1. Schneidplatte für ein Drehwerkzeug mit einem Grundkörper (11), der einen Kupplungsteil für das Anbringen der Schneidplatte (7) an einem Sitz (5) an der Stirnseite eines schaftartigen Halters (1) aufweist, der eine Längsachse (3) definiert, wobei der Kupplungsteil eine Festlegestruktur (13) aufweist, die durch Eingriff mit zugeordneten Flächen (9) am Sitz (5) die Schneidplatte (7) gegen eine Drehung um die Längsachse (3) sichert, und mit einem vom Umfang des Grundkörpers (11), bezogen auf die Längsachse (3), radial auskragenden Schneidkörper (21, 23) mit zumindest einer bei einer Relativdrehung zwischen Schneidplatte (7) und einem zu bearbeitenden Werkstück (31) wirksamen Schneidkante (25, 27), **dadurch gekennzeichnet, dass** am Grundkörper (11) zwei in Umfangsrichtung zueinander versetzte, radial auskragende, unterschiedlich ausgestaltete Schneidkörper (21, 23) vorhanden sind und dass deren Schneidkanten (25, 27) unterschiedlich ausgestaltet und derart orientiert sind, dass sämtliche ihre Schneidwirkung bei einund demselben Drehsinn der Relativdrehung entfalten, wobei beide Schneidkörper (21, 23) am Grundkörper (11) diametral angeordnet sind, so dass ihre Schneidkanten (25, 27) zueinander zumindest näherungsweise um 180' versetzt sind.

2. Schneidplatte nach Anspruch 1, **dadurch gekennzeichnet, dass** sich die Schneidkanten (25, 27) beider Schneidkörper (21, 23) in gleichem Radialabstand von der Längsachse (3) befinden.

3. Schneidplatte nach Anspruch 1, **dadurch gekennzeichnet, dass** sich die Schneidkanten (25, 27) beider Schneidkörper (21, 23) in unterschiedlichen Radialabständen von der Längsachse (3) befinden.

4. Schneidplatte nach Anspruch 2 oder Anspruch 3, **dadurch gekennzeichnet, dass** an einem oder an beiden Schneidkörpern (21, 23) mindestens eine axial schneidende Schneidkante (25, 27) vorhanden ist.

5. Schneidplatte nach einem der Ansprüche 1 bis 4, **dadurch gekennzeichnet, dass** die Schneidkanten (25, 27) für das Innenstechdrehen ausgebildet sind.

6. Schneidplatte nach Anspruch 5, **dadurch gekennzeichnet, dass** die Schneidkanten (25, 27) beider Schneidkörper (21, 23) für das Nutstechen ausgebildet sind.

7. Schneidplatte nach Anspruch 6, **dadurch gekennzeichnet, dass** die Schneidkanten (27) eines Schneidkörpers (23) für das Vorstechen einer Nut (35) und die Schneidkanten (25) des anderen Schneidkörpers (21) für das Fertigstechen der gleichen Nut (35), gegebenenfalls mit Erzeugung einer Nut-Aussenkantenfase (37, 41), ausgebildet sind.

8. Schneidplatte nach Anspruch 6, **dadurch gekennzeichnet, dass** die Schneidkanten (25, 27) beider Schneidkörper (21, 23) für das Stechen unterschiedlich geformter Nuten (35, 39, 43, 45), gegebenenfalls mit Erzeugung einer Nut-Aussenkantenfase (37, 41), ausgebildet sind.

9. Bearbeitungsverfahren, insbesondere Stechdrehen in Bohrungen (29) eines Werkstückes (31), mit einer Schneidplatte (7) gemäß einem der Ansprüche 1 bis 7, wobei das Werkstück (31) um eine zur Längsachse (3) des Halters (1) der Schneidplatte (7) vorzugsweise parallele Drehachse (33) in einem Drehsinn relativ zur Schneidplatte (7) gedreht wird, der Halter (1) für eine innerhalb der Bohrung (29) quer zur Drehachse (33) verlaufende Vorschubbewegung der Schneidkanten (25) des einen Schneidkörpers (21) für einen ersten Schneidvorgang bewegt wird, wonach, unter Beibehaltung des Drehsinnes, der Halter (1) für einen durch die Schneidkanten (27) des zweiten Schneidkörpers (23) bewirkten zweiten Schneidvorgang bewegt wird.

10. Bearbeitungsverfahren nach Anspruch 9, **dadurch gekennzeichnet, dass** der Halter (1) für den zweiten Schneidvorgang in der der Vorschubbewegung des ersten Schneidvorganges entgegengesetzten Richtung bewegt oder gedreht wird.

11. Bearbeitungsverfahren nach Anspruch 9 oder 10, **dadurch gekennzeichnet, dass** vor dem zweiten Schneidvorgang der Halter (1) in zur Drehachse (33) paralleler Richtung bewegt wird.

## Claims

1. Cutting insert for a lathe, with a basic body (11) which has a coupling part for attaching the cutting insert (7) to a seat (5) on the end face of a shank-like holder (1) which defines a longitudinal axis (3), the coupling part having a securing structure (13) which, by engaging with assigned faces (9) on the seat (5), secures the cutting insert (7) against rotation about the longitudinal axis (3), and with a cutting body (21, 23) projecting radially from the circumference of the basic body (11) with respect to the longitudinal axis (3) and having at least one cutting edge (25, 27) active during relative rotation between the cutting insert (7) and a workpiece (31) to be machined, **characterized in that** two radially projecting, differently configured cutting bodies (21, 23) offset to one another in the circumferential direction are present on the basic body (11), and **in that** their cutting edges (25, 27) are configured differently and are oriented in such a way that they exert all their cutting action in one and the same rotary direction of relative rotation, wherein the two cutting bodies (21, 23) are arranged diametrically on the basic body (11), so that their cutting edges (25, 27) are offset to one another at least approximately by 180°.

2. Cutting insert according to claim 1, **characterized in that** the cutting edges (25, 27) of the two cutting bodies (21, 23) are located at the same radial distance from the longitudinal axis (3).

3. Cutting insert according to claim 1, **characterized in that** the cutting edges (25, 27) of the two cutting bodies (21, 23) are located at different radial distances from the longitudinal axis (3).

4. Cutting insert according to claim 2 or claim 3, **characterized in that** at least one axially cutting cutting edge (25, 27) is present on one or on both cutting bodies (21, 23).

5. Cutting insert according to one of claims 1 to 4, **characterized in that** the cutting edges (25, 27) are designed for internal groove turning.

6. Cutting insert according to claim 5, **characterized in that** the cutting edges (25, 27) of the two cutting bodies (21, 23) are designed for groove cutting.

7. Cutting insert according to claim 6, **characterized in that** the cutting edges (27) of one cutting body (23) are designed for pre-cutting of a groove (35) and the cutting edges (25) of the other cutting body (21) are designed for the finish-cutting of the same groove (35), if appropriate with a groove outer-edge chamfer (37, 41) being generated.

8. Cutting insert according to claim 6, **characterized in that** the cutting edges (25, 27) of the two cutting bodies (21, 23) are designed for the parting-off of differently shaped grooves (35, 39, 43, 45), if appropriate with a groove outer-edge chamfer (37, 41) being generated.

9. Machining process, in particular groove turning in bores (29) of a workpiece (31), with a cutting insert (7) according to one of claims 1 to 7, the workpiece (31) being rotated in a rotary direction in relation to the cutting insert (7) about an axis of rotation (33) preferably parallel to the longitudinal axis (3) of the holder (1) of the cutting insert (7), the holder (1) being moved, for a first cutting operation, for a feed movement of the cutting edges (25) of one cutting body (21) taking place within the bore (29) transversally to the axis of rotation (33), after which, with the rotary direction being maintained, the holder (1) is moved for a second cutting operation brought about by the cutting edges (27) of the second cutting body (23).

10. Machining process according to claim 9, **characterized in that**, for the second cutting operation, the holder (1) is moved or rotated in the direction opposite to the feed movement of the first cutting operation.

11. Machining process according to claim 9 or 10, **characterized in that**, before the second cutting operation, the holder (1) is moved in a direction parallel to the axis of rotation (33).

## Revendications

1. Plaquette de coupe pour un outil rotatif, comprenant un corps de base (11) qui comprend une partie d'accouplement pour le montage de la plaquette de coupe (7) sur un logement (5) sur le côté frontal d'un support de type queue (1) qui définit un axe longitudinal (3), la partie d'accouplement comprenant une structure de fixation (13) qui, par l'engagement avec des surfaces associées (9) sur le logement (5), fixe la plaquette de coupe (7) de manière à l'empêcher de tourner autour de l'axe longitudinal (3), et comprenant un corps de coupe (21, 23), faisant saillie radialement à partir de la périphérie du corps de base (11) par rapport à l'axe longitudinal (3), doté d'au moins une arête de coupe (25, 27) opérant lors d'une rotation relative entre la plaquette de coupe (7) et une pièce à usiner (31), **caractérisée en ce que** deux corps de coupe (21, 23) configurés différemment, faisant saillie radialement et décalés l'un par rapport à l'autre dans la direction périphérique sont prévus sur le corps de base (11) et **en ce que** leurs arêtes de coupe (25, 27) sont configurées différemment et orientées de telle sorte qu'elles exercent toutes leur action de coupe dans le cas d'un seul et même sens de rotation de la rotation relative, les deux corps de coupe (21, 23) sont disposés de manière diamétrale sur le corps de base (11), de telle sorte que leurs arêtes de coupe (25, 27) soient décalées l'une par rapport à l'autre d'au moins approximativement 180°.

2. Plaquette de coupe selon la revendication 1, **caractérisée en ce que** les arêtes de coupe (25, 27) des deux corps de coupe (21, 23) se trouvent à la même distance radiale par rapport à l'axe longitudinal (3).

3. Plaquette de coupe selon la revendication 1, **caractérisée en ce que** les arêtes de coupe (25, 27) des deux corps de coupe (21, 23) se trouvent à des distances radiales différentes par rapport à l'axe longitudinal (3).

4. Plaquette de coupe selon la revendication 2 ou la revendication 3, **caractérisée en ce qu'**au moins une arête de coupe (25, 27) coupant axialement est prévue sur l'un des corps de coupe ou sur les deux corps de coupe (21, 23).

5. Plaquette de coupe selon l'une quelconque des revendications 1 à 4, **caractérisée en ce que** les arêtes de coupe (25, 27) sont réalisées pour le rainurage intérieur au tour.

6. Plaquette de coupe selon la revendication 5, **caractérisée en ce que** les arêtes de coupe (25, 27) des deux corps de coupe (21, 23) sont réalisées pour le rainurage.

7. Plaquette de coupe selon la revendication 6, **caractérisée en ce que** les arêtes de coupe (27) d'un corps de coupe (23) sont réalisées pour le prérainurage d'une rainure (35) et les arêtes de coupe (25) de l'autre corps de coupe (21) sont réalisées pour la finition de la même rainure (35), éventuellement avec production d'une chanfrein d'arête extérieure de rainure (37, 41).

8. Plaquette de coupe selon la revendication 6, **caractérisée en ce que** les arêtes de coupe (25, 27) des deux corps de coupe (21, 23) sont réalisées pour le rainurage de rainures (35, 39, 43, 45) formées différemment, éventuellement avec production d'un chanfrein d'arête extérieure de rainure (37, 41).

9. Procédé d'usinage, en particulier rainurage au tour dans des alésages (29) d'une pièce (31), comprenant une plaquette de coupe (7) selon l'une quelconque des revendications 1 à 7, la pièce (31) étant tournée autour d'un axe de rotation (33) de préférence parallèle à l'axe longitudinal (3) du support (1) de la plaquette de coupe (7) dans un sens de rotation par rapport à la plaquette de coupe (7), le support (1) étant déplacé pour un déplacement d'avance, s'étendant transversalement par rapport à l'axe de rotation (33) à l'intérieur de l'alésage (29), des arêtes de coupe (25) de l'un des corps de coupe (21) pour une première opération de coupe, après quoi, tout en maintenant le sens de rotation, le support (1) est déplacé pour une deuxième opération de coupe produite par les arêtes de coupe (27) du deuxième corps de coupe (23).

10. Procédé d'usinage selon la revendication 9, **caractérisé en ce que** le support (1) est déplacé ou tourné pour la deuxième opération de coupe dans le sens opposé au déplacement d'avance de la première opération de coupe.

11. Procédé d'usinage selon la revendication 9 ou 10, **caractérisé en ce qu'**avant la deuxième opération de coupe, le support (1) est déplacé dans la direction parallèle à l'axe de rotation (33).
